Europäisches Patentamt

European Patent Office

Office européen des brevets

(11) Numéro de publication: **0 214 920**
**A2**

(12) **DEMANDE DE BREVET EUROPEEN**

(21) Numéro de dépôt: **86440075.9**

(22) Date de dépôt: **03.09.86**

(51) Int. Cl.⁴: **G 05 B 19/04**
**G 05 B 19/405**

(30) Priorité: **04.09.85 FR 8513429**

(43) Date de publication de la demande:
**18.03.87 Bulletin 87/12**

(84) Etats contractants désignés:
**BE CH DE GB IT LI LU SE**

(71) Demandeur: **ELECTROLI, S.A.**
**14, rue des Casernes**
**F-67240 Bischwiller(FR)**

(72) Inventeur: **Gangloff, Marcel**
**55, rue du Prêteur**
**F-67500 Haguenau(FR)**

(74) Mandataire: **Nuss, Pierre**
**10, rue Jacques Kablé**
**F-67000 Strasbourg(FR)**

(54) **Dispositif de commande sélective et de sécurité pour machine combinée.**

(57) La présente invention concerne un dispositif de commande sélective et sécurité pour machine combinée.

Dispositif, caractérisé en ce qu'il est essentiellement constitué par un circuit électrique de commande d'au moins un moteur d'entraînement (1, 2) de plusieurs machines, muni sur son axe d'entraînement d'un nombre d'embrayages électriques (10 à 12) associés chacun à une poulie d'entraînement, égal au nombre de machines à entraîner, ce circuit électrique étant pourvu d'un interrupteur général (3) de mise sous tension, d'un sélecteur (4) des machines à mettre en marche, d'interrupteurs (5 à 8) de commande individuelle des machines, d'une temporisation électronique (9) de commande des embrayages électriques (10 à 12) et de relais de sécurité (13 et 14) intégrés dans les circuits électriques du ou des moteurs (1 et 2).

EP 0 214 920 A2

0214920

ELECTROLI, S.A.
14, rue des Casernes, 67240 BISCHWILLER (FR)

Dispositif de commande sélective et de sécurité pour machine
combinée

La présente invention concerne le domaine des machines
outils, en particulier des machines combinées, et a pour
objet un dispositif de commande sélective et de sécurité
pour machine combinée.

Actuellement, les machines de ce type, généralement
des machines à bois, sont munies d'un moteur d'entraînement
qui peut être relié sélectivement à l'une des machines par
simple liaison au moyen d'une courroie d'entraînement.
En général, une seule courroie peut être montée sur la
poulie motrice, de sorte qu'un fonctionnement simultané de
deux machines est impossible. Toutefois, dans ces machines
existantes, il subsiste un risque de blessure de l'opérateur lors d'un changement de courroie.

Il existe également des machines combinées présentant
plusieurs moteurs d'entraînement à commande individuelle affectés chacun à une machine. Ces machines permettent d'éviter les démontage et montage successifs des courroies à
chaque changement de machine, mais présentent cependant le
risque d'une mise en marche simultanée de plusieurs machines, ce qui est formellement interdit par les normes de
sécurité.

La présente invention a pour but de pallier ces
inconvénients.

Elle a, en effet, pour objet un dispositif de commande sélective et de sécurité pour machine combinée caractérisée en ce qu'il est essentiellement constitué par un circuit électrique de commande d'au moins un moteur d'entraînement de plusieurs machines, muni sur son axe d'entraînement d'un nombre d'embrayages électriques associés chacun à une poulie d'entraînement, égal au nombre de machines à entraîner, ce circuit électrique étant pourvu d'un interrupteur général de mise sous tension, d'un sélecteur des machines à mettre en marche, d'interrupteurs de commande individuelle des machines, d'une temporisation électronique de commande des embrayages électriques et de relais de sécurité intégrés dans les circuits électriques du ou des moteurs.

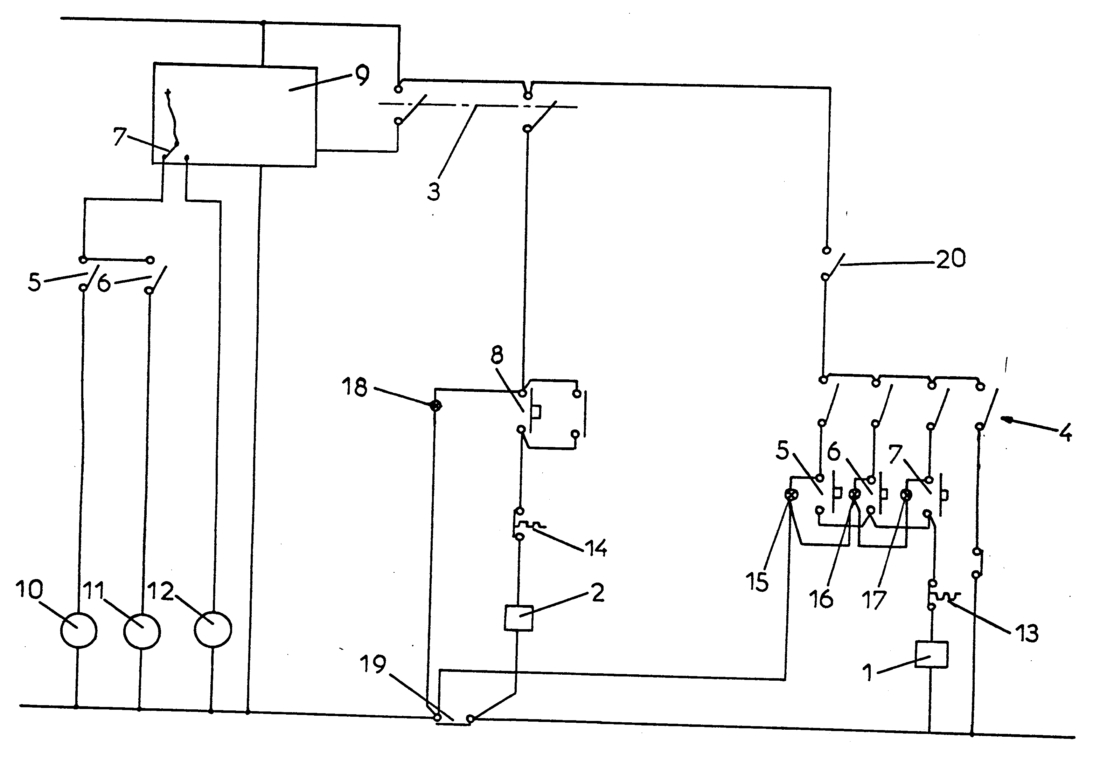

L'invention sera mieux comprise grâce à la description ci-après, qui se rapporte à un mode de réalisation préféré, donné à titre d'exemple non limitatif, et expliqué avec référence au dessin schématique annexé, dont la figure unique est un schéma électrique du dispositif conforme à l'invention.

Le dispositif de commande sélective et de sécurité pour machine combinée est constitué par un circuit électrique de commande de deux moteurs d'entraînement 1 et 2, dont l'un, 1, entraîne plusieurs machines au moyen d'embrayages électriques 10 à 12 montés sur son axe d'entraînement, et affectés chacun à une poulie d'entraînement correspondante, et dont l'autre, 2, entraîne directement une autre machine. A titre d'exemple, le moteur 1 entraîne, par l'intermédiaire des embrayages 10 à 12, une scie circulaire, une dégauchisseuse-raboteuse, et une toupie, et le moteur 2 entraîne une mortaiseuse.

Ce circuit électrique est pourvu, en outre, d'un interrupteur général 3 de mise sous tension, d'un sélecteur 4 des machines à mettre en marche, d'interrupteurs 5 à 8 de commande individuelle des machines, d'une temporisation électronique 9 de commande des embrayages électriques 10 à 12 et de relais de sécurité 13 et 14 intégrés dans les circuits électriques des moteurs 1 et 2.

Le moteur électrique 1 est avantageusement un moteur avec frein ralentisseur incorporé et le circuit électrique comporte, en outre, un interrupteur 19 d'arrêt d'urgence.

Le sélecteur 4 est, de préférence, un sélecteur rotatif présentant entre deux positions de sélection d'une machine, une position neutre, et actionnant, dans chaque position de service, un voyant lumineux 15 à 18 correspondant. Ainsi, l'opérateur peut se rendre compte instantanément de la machine sélectionnée et appuyer l'interrupteur 5 à 8 correspondant pour mettre ladite machine en marche.

La temporisation électronique 9 est préréglable à une durée de déclenchement prédéterminée, est mise sous tension par le passage du sélecteur 4 à une position neutre, et déclenche l'ouverture des relais de sécurité 13 et 14 ainsi que d'un interrupteur de sécurité 20 de débranchement du circuit électrique du sélecteur 4 tout en maintenant l'embrayage correspondant embrayé pendant la durée prédéterminée.

Pour la mise en marche d'une machine, l'opérateur bascule l'interrupteur général 3 en position de marche et commute le sélecteur 4 sur la position désirée. Le voyant lumineux 15 à 18 correspondant s'allume, et l'interrupteur correspondant 5 à 8 peut être actionné. Le moteur 1 ou 2 est alors mis en marche et l'embrayage correspondant actionné simultanément. Par basculement du sélecteur 4 à une autre position ou par actionnement de l'interrupteur 19, le circuit d'alimentation du moteur est coupé par le temporisateur 9 qui maintient l'embrayage de la machine précédemment en marche en accouplement pendant le temps de freinage du moteur, et qui coupe simultanément l'alimentation des moteurs 1 et 2 par ouverture des contacts des relais 13 et 14 ainsi que de l'interrupteur de sécurité 20. Après écoulement de la durée de temporisation prédéterminée, l'interrupteur 20 est refermé automatiquement ainsi que les contacts des relais 13 et 14 autorisant une nouvelle mise en marche de machine.

Grâce à l'invention, il est possible de réaliser une commande sélective, en parfaite sécurité, sans changement de courroie, d'une machine donnée sans risque de fonctionnement simultané d'une autre machine.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

0214920

- R E V E N D I C A T I O N S -

1. Dispositif de commande sélective et de sécurité pour machine combinée, caractérisé en ce qu'il est essentiellement constitué par un circuit électrique de commande d'au moins un moteur d'entraînement (1, 2) de plusieurs machines, muni sur son axe d'entraînement d'un nombre d'embrayages (10 à 12) associés chacun à une poulie d'entraînement, égal au nombre de machines à entraîner, ce circuit électrique étant pourvu d'un interrupteur général (3) de mise sous tension, d'un sélecteur (4) des machines à mettre en marche, d'interrupteurs (5 à 8) de commande individuelle des machines, d'une temporisation électronique (9) de commande des embrayages électriques (10 à 12) et de relais de sécurité (13 et 14) intégrés dans les circuits électriques du ou des moteurs (1 et 2).

2. Dispositif, suivant la revendication 1, caractérisé en ce que le sélecteur (4) est, de préférence, un sélecteur rotatif présentant entre deux positions de sélection d'une machine, une position neutre, et actionnant, dans chaque position de service, un voyant lumineux (15 à 18) correspondant.

3. Dispositif, suivant l'une quelconque des revendications 1 et 2, caractérisé en ce que la temporisation électronique (9) est préréglable à une durée de déclenchement prédéterminée, est mise sous tension par le passage du sélecteur (4) à une position neutre, et déclenche l'ouverture des relais de sécurité (13 et 14) ainsi que d'un interrupteur de sécurité (20) de débranchement du circuit électrique du sélecteur (4) tout en maintenant l'embrayage correspondant embrayé pendant la durée prédéterminée.